# FASCICULE DE BREVET EUROPEEN

(11) **EP 2 303 741 B1**
(45) Date de publication et mention de la délivrance du brevet: **28.11.2012**
(21) Numéro de dépôt: 09737056.3
(22) Date de dépôt: 15.07.2009
(51) Int. Cl.: B65H 21/00

(54) **JONCTION PAR RABOUTAGE DE DEUX BANDES DE MATERIAUX SOUPLES ET DEFORMABLES POUR REVETEMENTS DE SOLS ET PROCEDE DE MISE EN OEUVRE, ET LES PRODUITS OBTENUS PAR LE PROCEDE**
ZUSAMMENFÜGUNGSVERBINDUNG ZWISCHEN ZWEI STREIFEN AUS FLEXIBLEM UND VERFORMBAREM MATERIAL FÜR FUSSBODENBELÄGE UND DURCHFÜHRUNGSVERFAHREN DAFÜR SOWIE DURCH DAS VERFAHREN ERHALTENE PRODUKTE
JOINTED CONNECTION BETWEEN TWO STRIPS OF FLEXIBLE AND DEFORMABLE MATERIAL FOR FLOOR COVERINGS AND METHOD OF IMPLEMENTING IT, AND PRODUCTS OBTAINED USING THE METHOD

(30) Priorité: 15.07.2008 FR 0854800
(43) Date de publication de la demande: 06.04.2011
(73) Titulaire: GERFLOR, 69100 Villeurbanne (FR)
(72) Inventeur: COUSIN, Pascal, F-26000 Valence (FR); CEYSSON, Olivier, F-84500 Bollene (FR)
(74) Mandataire: Dupuis, François
(86) Numéro de dépôt international: PCT/FR2009/051400
(87) Numéro de publication internationale: WO 2010/007310

(56) Documents cités:
- WO-A-00/20197
- DE-A1- 2 653 991
- FR-A- 2 063 574
- FR-A- 2 880 906
- US-A- 5 721 032
- US-A- 5 791 114
- US-A1- 2003 131 549
- US-A1- 2003 144 103

## Description

L'invention se rattache au secteur technique de l'assemblage de bandes de matériaux ou de produits pour établir une continuité de présentation, pour constituer des revêtements de sols et murs.

Il est bien connu d'assembler pour les revêtements de sols et de murs des produits finis ou des composants de produits par des liaisons mâle femelle s'emboîtant ou s'enchevêtrant. Ces liaisons sont temporaires, c'est-à-dire réalisées d'une manière non définitive en permettant si besoin est un démontage des produits.

Par exemple, dans le domaine des revêtements de sols, le Demandeur a lui-même développé des panneaux d'assemblage susceptibles de s'imbriquer les uns dans les autres pour réaliser une surface finie. On a ainsi décrit dans le brevet FR 2880906 un concept de dalles de revêtements autobloquantes avec la mise en oeuvre de forme d'emboîtement complémentaire en saillies et en découpes permettant l'assemblage. Les produits ou dalles en l'espèce sont rigides ou avec une légère capacité de déformation pour permettre leur assemblage, et ce, sans modification de leur structure

les brevets FR 2.063.574 et DE 2653991 sont considérés comme l'état de technique le plus proche.

Le problème posé à l'origine de la démarche et de la réflexion concerne la fabrication de ces revêtements souples en matériau plastique ou composite selon les caractéristiques structurelles en fonction des besoins recherchés.

Il peut y avoir nécessité, après des contrôles de fabrication, d'éliminer les parties détériorées, ou non conformes aux exigences, et donc de les enlever par découpage ou autres manières par rapport au restant de la bande de matière. Si lesdites bandes sont enroulées en bobine pour des questions de livraison et de stockage, l'inconvénient sera d'avoir des lots de bobines de capacité et volume moindre. Ainsi, pour lesdits des revêtements de sols et murs, il n'y aucune possibilité de raccorder les parties de bandes de revêtement non détériorées, sauf superposition des parties de bandes et liaison. Il y a donc une perte de matériau et aussi une certaine difficulté à gérer les stocks de bobines constitués pour les matériaux enroulés de capacité différente en longueur.

La démarche du Demandeur a donc été de réfléchir à ce problème posé et de trouver une solution satisfaisante. Cette démarche de réflexion a été étendue aussi bien pour maîtriser le stade de fabrication des produits pouvant être des composants intermédiaires que pour des produits finis.

On connaît par le document DE 2 653 991 le principe de jonction par raboutage de deux bandes de matériaux.

On connaît par le document FR 2 063 574 un procédé de fabrication de jonction à partir de bandes de matériaux ou panneaux selon le préambule de la revendication 7.

Par ailleurs, outre la qualité des produits ou sous-produits à obtenir, il fallait tenir compte du fait qu'il y avait lieu d'éviter tout apport de matière extérieure susceptible de gêner l'aspect des produits finis avec par exemple des fermetures d'aspérité, et aussi préserver une bonne tenue à l'assemblage.

La solution apportée par l'invention répond à tous ces critères et offre de nombreux avantages. Par ailleurs, la mise en oeuvre de l'invention n'entraîne aucun apport de matière complémentaire, et il n'y a aucune surépaisseur à l'endroit de la rajouture.

La solution apportée à l'invention permet un recyclage des bandes puisqu'il n'y a pas adjonction de matière dans un matériau différent. Le procédé peut être automatisé et il nécessite l'intervention d'un opérateur.

En outre, cette solution selon l'invention offre la capacité de réaliser soit des produits finis, soit des produits intermédiaires utilisés ensuite en complément avec d'autres composants.

Selon une première caractéristique, la jonction par raboutage de deux bandes de matériaux de revêtements de sols et murs est remarquable en ce que les deux bandes de matériaux souples destinées à être assemblées présentent à leurs extrémités destinées à être assemblées, une pluralité en alternance de formes en saillie et des découpes de configuration différente positionnées et enchevêtrées en définissant des espaces libres, lesdites configurations différentes autorisant une liaison mécanique entre les découpes et languettes en vue du déplacement de l'ensemble pour assemblage et en ce qu'en situation d'assemblage, lesdites parties assemblées sont liées entre elles sans l'apport de matériau complémentaire par déformation et enchevêtrement matière selon une zone de jonction en remplissant les espaces libres de manière homogène, et en ce que la zone de jonction présente, après assemblage, une épaisseur égale à l'épaisseur des autres parties de bandes.

Selon une autre caractéristique, le procédé de fabrication de jonction à partir de bandes de matériaux ou panneaux souples présentant à leurs extrémités en regard des zones d'assemblage mâle femelle par ajustement, est remarquable en ce qu'on procède à la mise en forme par découpage des extrémités en regard de deux bandes de matériaux ou panneaux destinés à être assemblés et ayant une capacité de déformation, on réalise des languettes et des ouvertures sur chacune des extrémités des bandes de matériaux ou panneaux dans une configuration différente, on procède à l'assemblage des bandes ou panneaux ainsi réalisés par enchevêtrement des languettes et ouvertures respectives, selon une angulation d'introduction déterminée en oblique en rapprochement l'une de l'autre puis en faisant pivoter les deux bandes en vue de les présenter sensiblement en alignement l'une de l'autre, en faisant apparaître des espaces libres, on procède au déplacement de l'ensemble constitué vers le poste d'assemblage de la bande et formation de la rajouture en tirant la bande en aval par la liaison mécanique des languettes et découpes, on procède à l'assemblage de deux bandes de matériaux ou panneaux par action de pressage à l'endroit de la zone de jonction, par déformation et enchevêtrement de matière des parties de languettes considérées entre elles en remplissant les espaces libres de manière homogène et en obtenant une jonction unique homogène sans apport de matériau complémentaire, et de même épaisseur.

Ces caractéristiques et d'autres encore ressortiront bien de la suite de la description.

Pour fixer l'objet de l'invention illustrée d'une manière non limitative aux figures des dessins où :
- la figure 1 est une vue en perspective de ¾ illustrant la jonction de deux bandes de matériaux ou panneaux à l'état fini.
- la figure 2 est une vue à plat de deux bandes ou panneaux destinés à être assemblés.
- la figure 3 est une vue en perspective illustrant en phase initiale le prépositionnement des bandes ou panneaux entre eux, ceux-ci étant orientés en oblique l'un par rapport à l'autre pour être liés.
- la figure 4 est une vue de profil des deux bandes pré-assemblées avant mise en oeuvre de leur liaison.
- la figure 5 est une vue de profil des deux bandes assemblées selon la figure 1.
- les figures 6, 7, 8 sont des vues à caractère schématique illustrant des profils possibles des languettes et découpes formées sur les extrémités des bandes ou panneaux à assembler.

Afin de rendre plus concret l'objet de l'invention, on la décrit maintenant d'une manière non limitative illustrée aux figures des dessins.

L'invention vise une jonction (J) par raboutage de deux bandes de matériaux souples (1-2) ou panneaux pour revêtements de sols et murs destinés à être assemblés pour constituer après assemblage un ensemble unique homogène, sans apport extérieur de matière ou matériau d'un quelconque composant ou moyen de liaison. Ces bandes de matériau ou panneaux peuvent être en matériau plastique, et de manière générale selon les technologies connues des revêtements de sols et murs monocouche, multicouches et autres.

Cette jonction est établie à partir des extrémités en regard (1a-2a) des bandes ou panneaux précités ou sur une distance correspondant à la zone de liaison nécessaire et d'enchevêtrement. Cette zone peut être de l'ordre de 2 à 5 cm par exemple.

Selon l'invention, chaque extrémité (1a-2a) des bandes de matériaux ou panneaux est agencée dans sa longueur avec une succession alternée de languettes (1b-2b) en saillies profilées entre lesquelles sont formées des ouvertures (1c-2c) complémentaires susceptibles d'autoriser l'insertion et le guidage des languettes de configuration différente non complémentaire.. Ainsi qu'il apparaît aux dessins, le positionnement des languettes (1b-2b) et des ouvertures (1c-2c) est tel qu'il y a un décalage d'un pas, de sorte que les languettes (1b) se positionnent dans les ouvertures (2c) et les languettes (2b) dans les ouvertures (1c), en faisant apparaître des espaces (e) libres.

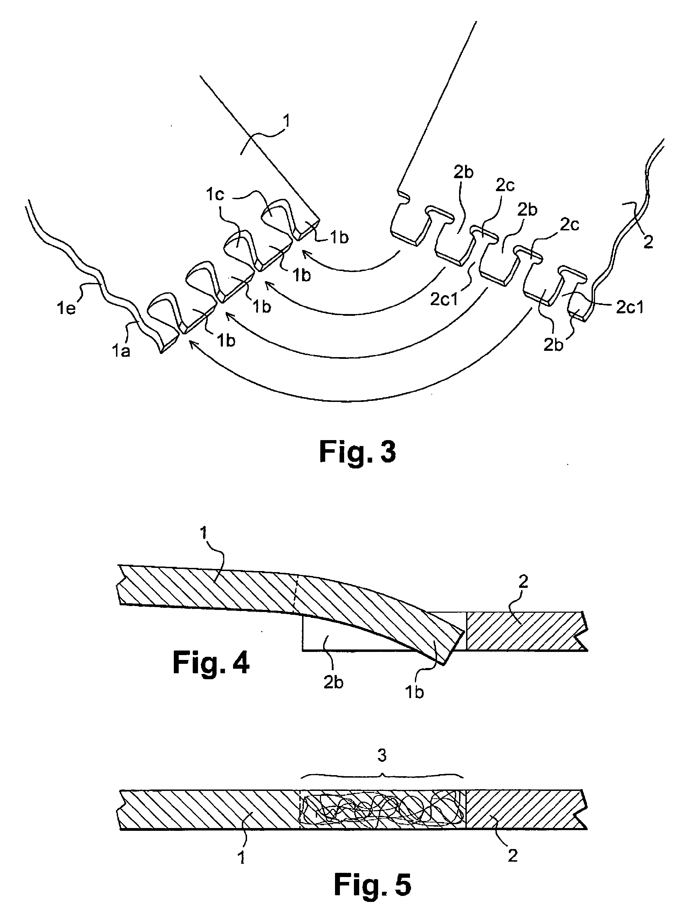

Selon l'invention, le profil des languettes (1b) est différent du profil des languettes (2b), et le profil des ouvertures (1c) est également différent de celui des ouvertures (2c), tout en permettant un assemblage comme cela découle de la figure 3. Cette absence d'identité de formes entre les languettes elles-mêmes et les ouvertures elles-mêmes et l'ensemble des languettes et ouvertures est essentielle et permet d'optimiser le procédé de l'invention.

Cette disposition a pour fonction de permettre, lors de la mise en place et accrochage des bandes de matériaux ou panneaux entre elles ou entre eux et leur retenue, de créer avec liaison un chevauchement des zones concernées comme cela apparaît, et d'autoriser en vue de la phase de liaison de deux bandes consécutives la traction d'une bande en aval de l'autre bande vers le poste de fabrication de la zone de jonction et ainsi de remplissage des espaces libres.

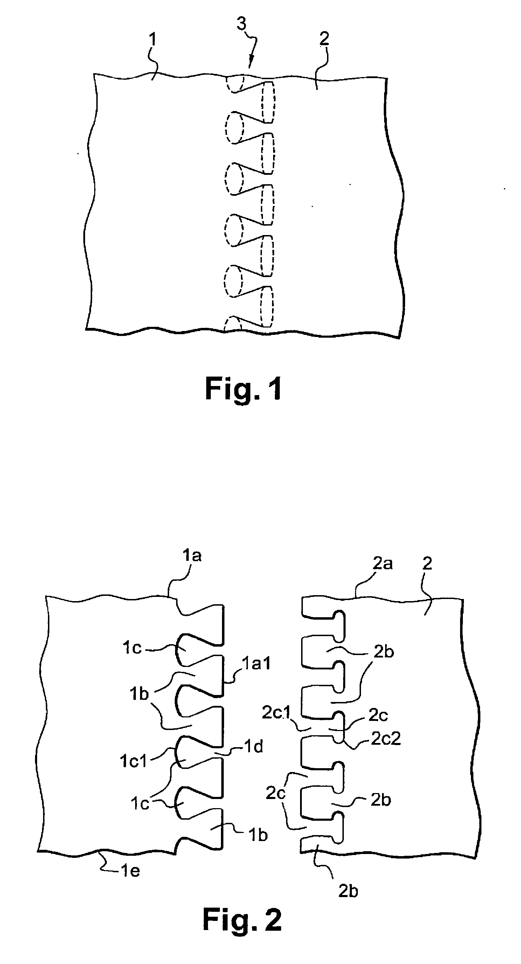

Ainsi qu'il apparaît figures 1 et 2 par exemple, les languettes (1b) ont une configuration sensiblement triangulaire avec leur base (1a1) orientée vers l'extérieur. Les ouvertures (1c) adjacentes ont ainsi un profil triangulaire avec une base (1c1) orientée vers l'intérieur de la bande ou du panneau. Un passage (1d) sépare le haut de la languette avec la partie côté de l'ouverture (1c). Les languettes (1b) sont complètes dans la largeur de la bande ou panneau et en extrémité, on a des languettes en demi-forme avec un bord droit (1e) longitudinal en prolongement de la bordure de la bande. L'autre bande (2) présente à titre d'exemple illustré des languettes (2b) en forme de talon carré ou rectangulaire (2b1) destiné à s'engager dans les ouvertures (1c). Les ouvertures (2c) ont-elles une forme en T avec un canal (2c1) dans l'axe de la bande et une tête (2c2) perpendiculaire.

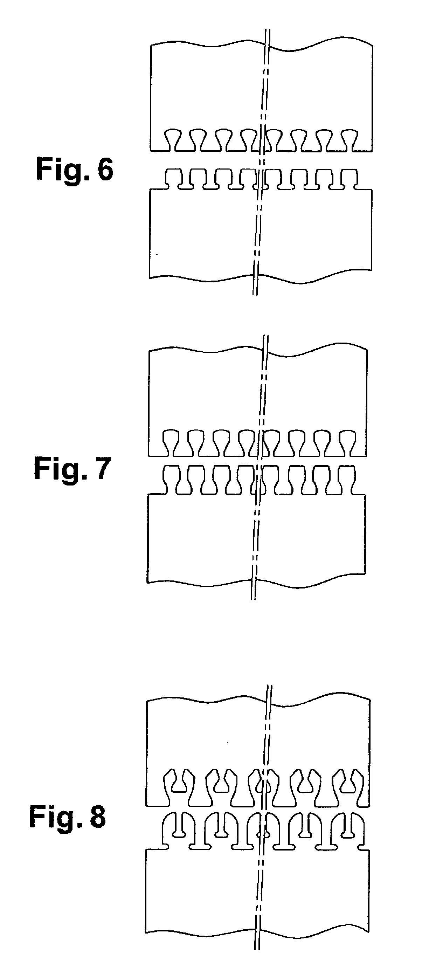

On a représenté aux figures 6, 7, 8 d'autres formes possibles de languettes et ouvertures qui seront choisies en fonction des applications.

Ainsi, on comprend qu'en l'absence d'ajustement précis entre les languettes et les ouvertures, il peut y avoir un chevauchement partiel comme représenté figure 4. Il y a des espaces (e) exempts de matière. Dans cette situation intermédiaire, il peut y avoir un léger débattement entre les bandes et panneaux, la retenue restant néanmoins établie entre les bandes et panneaux par suite des zones d'accrochage. Cela permet d'avoir une liaison mécanique d'assemblage pour amener les bandes vers le poste de fabrication de la rajouture et de la jonction définitive.

La phase suivante consiste alors à assembler les deux bandes de matériaux ou panneaux. Il y a lieu de rappeler que les bandes de matériaux ou panneaux réalisés en matériau plastique ou composite et toute structure connue dans la conception de revêtements de sols et murs, est soumise à une certaine adaptabilité à être déformée.

La phase préalable consiste, après découpage des languettes et des ouvertures à l'aide d'outils appropriés, à présenter les deux extrémités en bandes ou panneaux pour les accrocher l'une à l'autre. On procède à cet assemblage comme représenté figure 3 dans une situation en oblique pour faciliter l'engagement et la liaison des extrémités des bandes ou panneaux. Les bandes ou panneaux sont introduits en oblique en présentant les languettes d'une bande ou panneau dans les ouvertures établies sur l'autre bande ou panneau en oblique, sur la configuration des languettes ou ouvertures et encore à les mettre à plat comme représenté figure 4. Une fois l'engagement effectué, les deux bandes de matériaux ou panneaux sont présentées sensiblement en alignement l'une de l'autre en créant des surépaisseurs à l'endroit de leur zone de jonction. Des espaces libres sont formés.

On procède ensuite à la mise en forme de la jonction dans sa configuration définitive.

On décrira la mise en oeuvre engendrant une déformation et enchevêtrement de matière sur la zone de jonction. Dans le cas de bandes en matériau plastique ou textile incluant des fibres ou fils thermoplastique, la zone de jonction est positionnée sur une matrice ou autre support. Par pressage à chaud sur la zone considérée, on vient faire fluer la matière constituée des deux bandes ou panneaux au niveau de sa languette et aussi sur les zones de contact en chevauchement des bandes ou panneaux. Par fluage, on obtient une liaison moléculaire des parties liées. Dans des espaces libres (e) apparents lors du pré assemblage, le fluage de la matière pressée à chaud entraîne le remplissage desdits espaces vides. Après refroidissement, on obtient une liaison fixe avec des propriétés mécaniques de résistance à l'arrachement élevées.

Après cette opération, on obtient un ensemble continu des deux bandes ou panneaux dans la même épaisseur. Un traitement final de surfaçage et de décoration peut être envisagé sur la ou les faces finales.

Cette opération de raboutage peut être intégrée dans le processus de fabrication en bobines du revêtement de sol par exemple en éliminant les zones défectueuses, et en procédant au rajoutage des parties de bandes entre elles.

L'ensemble obtenu peut ainsi intervenir comme un élément intermédiaire en sandwich par exemple avec d'autres couches de matériaux et servir de décoration ou autres.

L'ensemble peut en lui-même constituer un produit fini à condition de faire un traitement de surface superficiel.

Par ailleurs, la zone de jonction peut être pleine sur la totalité de sa surface et dans ce cas elle offre des propriétés d'étanchéité.

D'autres modes de liaison peuvent être utilisés, thermo scellage, presse chauffante, ultrasons, etc.

Ledit revêtement peut inclure dans sa structure une couche intermédiaire incluant la jonction par raboutage mise en oeuvre selon l'invention.

L'invention trouve de très nombreuses utilisations pour les revêtements de sols et de murs qui utilisent des complexes et des structures ayant des propriétés matières de déformation.

## Revendications

1. Jonction par raboutage de deux bandes de matériaux de revêtement de sols et murs (1-2) **caractérisée en ce que** les deux bandes de matériaux souples destinées à être assemblées présentent à leurs extrémités (1a-2a) destinées à être assemblées, une pluralité de formes en saillie du type languettes (1b-2b) et des découpes (1c-2c) de configuration différente positionnées et enchevêtrées en définissant des espaces libres, lesdites configuration différentes autorisant une liaison mécanique entre les découpes et languettes en vue du déplacement de l'ensemble par assemblage, et **en ce qu'**en situation d'assemblage, lesdites parties assemblées sont liées entre elles sans l'apport de matériau complémentaire par déformation et enchevêtrement de matière selon une zone de jonction en remplissant les espaces libres de manière homogène, et **en ce que** la zone de jonction présente, après assemblage, une épaisseur égale à l'épaisseur des autres parties de bandes.

2. Jonction selon la revendication 1 **caractérisée en ce que** les languettes (1b) (2b) et les découpes (1c) (2c) sont complémentaires mais non identiques et alternées pour être assemblées, au moins lesdites parties d'extrémité à assembler étant déformables.

3. Jonction selon la revendication 1, **caractérisée en ce que** la zone de jonction présente, après assemblage, une épaisseur égale à l'épaisseur des autres parties de bandes, ladite jonction créant une rajouture homogène et continue.

4. Jonction selon la revendication 1, **caractérisée en ce que** les languettes (1b) ont une configuration sensiblement triangulaire avec leur base (1a1) orientée vers l'extérieur,
et **en ce que** les ouvertures (1c) adjacentes ont un profil triangulaire avec une base (1c1) orientée vers l'intérieur de la bande ou du panneau,
et **en ce qu'**un passage (1d) sépare le haut de la languette avec la partie côté de l'ouverture (1c).

5. Jonction selon la revendication 4, **caractérisée en ce que** les languettes (1b) sont complètes dans la largeur de la bande ou panneau et en extrémité, les languettes sont en demi-forme avec un bord droit (le) longitudinal en prolongement de la bordure de la bande.

6. Jonction selon la revendication 4, **caractérisée en ce que** l'autre bande (2) présente des languettes (2b) en forme de talon carré ou rectangulaire (2b1) destiné à s'engager dans les ouvertures (1c), et **en ce que** les ouvertures (2c) ont elles une forme en T avec un canal (2c1) dans l'axe de la bande et une tête (2c2) perpendiculaire.

7. Procédé de fabrication de jonction à partir de bandes de matériaux ou panneaux souples présentant à leurs extrémités en regard des zones d'assemblage mâle femelle par ajustement, qui est remarquable en ce qu'on procède à la mise en forme par découpage des extrémités en regard de deux bandes de matériaux ou panneaux destinés à être assemblés et ayant une capacité de déformation, on réalise des languettes et des ouvertures sur chacune des extrémités des bandes de matériaux ou panneaux dans une configuration différente. On procède à l'assemblage des bandes ou panneaux ainsi réalisés par enchevêtrement des languettes et ouvertures respectives, selon une angulation d'introduction déterminée en oblique en rapprochement l'une de l'autre puis en faisant pivoter les deux bandes en vue de les présenter sensiblement en alignement l'une de l'autre en faisant apparaître des espaces libres on procède au déplacement de l'ensemble constitué vers le poste d'assemblage de la bande et formation de la rajouture en tirant la bande en aval par la liaison mécanique des languettes et découpes, on procède à l'assemblage de deux bandes de matériaux ou panneaux par action de pressage à l'endroit de la zone de jonction, par déformation et enchevêtrement de matière des parties de languettes considérées entre elles en remplissant les espaces libres de manière homogène et en obtenant une jonction unique homogène sans apport de matériau complémentaire, et de même épaisseur.

8. Procédé selon la revendication 7, **caractérisé en ce qu'**on procède au pivotement des deux bandes en vue de les présenter sensiblement en alignement l'une de l'autre en entraînant la création de surépaisseurs à l'endroit de leur zone de jonction.

9. Procédé selon la revendication 7, **caractérisé en ce que** les bandes de matériaux ou panneaux à assembler sont en matière plastique, et l'opération de pressage est une opération de pressage à chaud autorisant le fluage des matériaux et leur liaison moléculaire.

10. Procédé selon la revendication 9, **caractérisé en ce qu'**on procède à l'assemblage des languettes des bandes de matériaux ou panneaux en définissant des espaces libres sur la zone de jonction à établir,
et **en ce qu'**après pressage à chaud et fluage de la matière, lesdits espaces libres sont remplis.

11. Procédé selon la revendication 7, **caractérisé en ce que** les bandes de matériaux ou panneaux à assembler sont en matériau textile incorporant des fibres ou films thermoplastiques, et **en ce que** l'opération de ramollissement et de fluage permet d'assurer leur liaison moléculaire.

12. Revêtement de sols ou murs mettant en oeuvre la jonction de bandes de matériaux ou panneaux selon l'une quelconque des revendications 1 à 6, et la mise en oeuvre du procédé selon la revendication 7 à 11 **caractérisé en ce qu'**il comprend une couche intermédiaire dans sa structure ou bandes de matériaux incluant la jonction par raboutage.

13. Revêtement de sols ou murs mettant en oeuvre la jonction de bandes matériaux ou panneaux selon l'une quelconque des revendications 7 à 11, **caractérisé en ce qu'**il constitue un produit fini en tant que tel.

## Claims

1. Joint obtained by splicing two strips of wall and floor covering materials (1-2), **characterised in that** the two strips of flexible material that are to be joined have, at their ends (1a-2a) that are to be joined, a plurality of protruding tongue-type tabs (1b-2b) and cut-outs (1c-2c) having different configurations, positioned and interlocked so as to leave free spaces, said different configurations allowing mechanical connection of the cut-outs and tabs with a view to displacing the joint assembly and **in that**, when assembled, said assembled parts are linked together, without adding any additional material, by deformation and interlocking the material over a splice area with the free spaces filling homogeneously and **in that** the splice area has, after assembly, a thickness equal to the thickness of the other parts of the strips.

2. Joint as claimed in claim 1, **characterised in that** the tabs (1b) (2b) and the cut-outs (1c) (2c) match each other but are not identical and alternate so that they can be joined with at least said end parts that are to be assembled being deformable.

3. Joint as claimed in claim 1, **characterised in that** the splice area has, after assembly, a thickness equal to the thickness of the other parts of the strips, said joint creating a homogeneous and continuous seam.

4. Joint as claimed in claim 1, **characterised in that** the tabs (1b) have a configuration that is substantially triangular with an outward facing base (1a1),
and **in that** adjacent openings (1c) have a triangular profile with a base (1c1) that faces the interior of the strip or panel,
and **in that** a gap (1d) separates the top of the tab from the side part of the opening (1c).

5. Joint as claimed in claim 4, **characterised in that** full tabs (1b) extend over the width of the strip or panel and the edge tab has a half shape with a longitudinal straight edge (1e) that is an extension of the edge of the strip.

6. Joint as claimed in claim 4, **characterised in that** the other strip (2) has tabs (2b) shaped like a square or rectangular stub (2b1) designed to fit into openings (1c) and **in that** openings (2c) have a T-shape with a channel (2c1) along the axis of the strip and a perpendicular tip (2c2).

7. Method for obtaining a joint using flexible strips of materials or panels having, at their opposite-facing ends, male and female splicing areas wherein one shapes, by cutting out, the opposite-facing ends of two strips of material or panels intended to be joined and capable of deformation in order to produce tabs and openings on each of the ends of the strips of materials or panels in a different configuration, one joins the strips or panels thus produced by interlocking the respective tabs and openings at a specific oblique insertion angle by bringing them together and then swivelling the two strips in order to align them substantially with each other, thereby leaving free spaces, then one moves the assembly thus obtained to the station for joining the strip and forming the seam by pulling the strip downstream by mechanically joining the tabs and cut-outs, one joins the two strips of material or panels by pressing on the splice area, by deformation and interlocking of the material of the parts of the tabs in question and by filling the free spaces homogeneously and obtaining a single homogeneous joint of the same thickness without adding any additional material.

8. Method as claimed in claim 7, **characterised in that** one swivels the two strips in order to align them substantially with each other, thereby causing the creation of extra thicknesses at the point where they are spliced.

9. Method as claimed in claim 7, **characterised in that** the strips of material or panels to be joined are made of plastic and the pressing operation is a hot pressing operation that enables creep of the materials and their molecular bonding.

10. Method as claimed in claim 9, **characterised in that** one joins the tabs of the strips of material or panels leaving free spaces on the splice area that is to be produced,
and **in that**, after the hot pressing and creep process said free spaces are filled.

11. Method as claimed in claim 7, **characterised in that** the strips of material or panels to be joined are made of a textile material incorporating fibres or thermoplastic films and **in that** the softening and creep operation makes it possible to ensure their molecular bonding.

12. Floor or wall covering using the joining of strips of materials or panels in accordance with any of claims 1 to 6 and using the method as claimed in claims 7 to 11, **characterised in that** it comprises, in the structure or strips of materials, an intermediate layer that includes a spliced joint.

13. Floor or wall covering using the joining of strips of materials or panels as claimed in any of claims 7 to 11, **characterised in that** it constitutes a finished product in itself.

## Patentansprüche

1. Stoßverbindung von zwei Materialbahnen von Boden- und Wandbekleidungen (1-2), **dadurch gekennzeichnet, dass** die beiden zu verbindenden flexiblen Materialbahnen an ihren zu verbindenden Enden (la-2a) mehrere vorspringende Formen nach Art von Zungen (1b-2b) und Ausschnitten (1c-2c) mit unterschiedlicher Gestaltung aufweisen, die unter Beschreibung von Freiräumen positioniert und verzahnt sind, wobei die besagten unterschiedlichen Formen eine mechanische Verbindung zwischen den Ausschnitten und Zungen zwecks Verlagerung der Einheit durch Fügung ermöglichen, und dass die besagten zusammengefügten Teile ohne zusätzlichen Materialeintrag durch Materialverformung und -verzahnung entlang einer Verbindungszone miteinander verbunden werden und dabei die Freiräume in homogener Weise ausfüllen, und dass die Verbindungszone nach dem Zusammenfügen so dick ist wie die anderen Materialbahnteile.

2. Verbindung nach Anspruch 1, **dadurch gekennzeichnet, dass** die Zungen (1b)(2b) und Ausschnitte (1c)(2c) komplementär, aber nicht identisch sind und alternierend zusammengefügt werden können, wobei zumindest die zu verbindenden Endstücke verformbar sind.

3. Verbindung nach Anspruch 1, **dadurch gekennzeichnet, dass** die Verbindungszone nach dem Zusammenfügen so dick ist wie die anderen Materialbahnteile, wobei die besagte Verbindung eine homogene und fortlaufende Anfügung bildet.

4. Verbindung nach Anspruch 1, **dadurch gekennzeichnet, dass** die Zungen (1b) eine ziemlich genau dreieckige Form mit einer nach außen gerichteten Basis (1a1) haben,
und dass die angrenzenden Öffnungen (1c) ein dreieckiges Profil mit einer zum Inneren der Bahn oder der Platte hin gerichteten Basis (1c1) haben,
und dass ein Durchlass (1d) den oberen Teil der Zunge vom seitlichen Teil der Öffnung (1c) trennt.

5. Verbindung nach Anspruch 4, **dadurch gekennzeichnet, dass** die Zungen (1b) in der Breite der Bahn oder Platte vollständig und am Ende halbförmig sind, mit einem länglichen geraden Rand (1e) in Verlängerung der Materialbahnkante.

6. Verbindung nach Anspruch 4, **dadurch gekennzeichnet, dass** die andere Materialbahn (2) Zungen (2b) in Form eines quadratischen oder rechteckigen Absatzes (2b1) zur Einführung in die Öffnungen (1c) aufweist, und dass die Öffnungen (2c) eine T-Form mit einem Kanal (2c1) in der Achse der Bahn und einem rechtwinklig dazu angeordneten Kopf(2c2) besitzen.

7. Verfahren zur Verstellung von Verbindungen ausgehend von flexiblen Materialbahnen oder Platten, die an ihren einander zugewandten Enden Verbindungszonen zum Zusammenstecken aufweisen, wobei das Verfahren sich dadurch auszeichnet, dass die sich gegenüberliegenden Enden von zwei zu verbindenden und verformbaren Materialbahnen oder Platten formgerecht ausgestanzt werden, dass an jedem Ende der Materialbahnen oder Platten Zungen und Öffnungen in einer unterschiedlichen Form realisiert werden, dass die derart realisierten Materialbahnen oder Platten durch Verzahnung der jeweiligen Zungen und Öffnungen nach einem bestimmten schrägen Eingriffswinkel verbunden werden, wobei die beiden Bahnen einander angenähert und dann so geschwenkt werden, dass sie ziemlich genau auf einer Linie zueinander ausgerichtet sind und Freiräume in Erscheinung treten, dass die so gebildete Einheit zur Station für die Verbindung der Materialbahn und Bildung der Anfügung verlagert wird, indem durch die mechanische Verbindung der Zungen und Ausschnitte an der nachgeordneten Bahn gezogen wird, dass zwei Materialbahnen oder Platten an der Stelle der Verbindungszone durch Materialverformung und -verzahnung der betreffenden Zungenteile miteinander zusammengepresst werden, wobei die Freiräume gleichartig ausgefüllt werden und ohne zusätzlichen Materialeintrag eine einzige homogene Verbindung gleicher Dicke erzielt wird.

8. Verfahren nach Anspruch 7, **dadurch gekennzeichnet, dass** die beiden Bahnen geschwenkt werden, um sie ziemlich genau zueinander ausgerichtet vorzulegen, wobei an der Stelle ihrer Verbindungszone Überdicken gebildet werden.

9. Verfahren nach Anspruch 7, **dadurch gekennzeichnet, dass** die zu verbindenden Materialbahnen oder Platten aus Kunststoff bestehen und der Pressvorgang ein Heißpressvorgang ist, der das plastische Fließen der Materialien und ihre molekulare Verbindung ermöglicht.

10. Verfahren nach Anspruch 9, **dadurch gekennzeichnet, dass** die Zungen der Materialbahnen oder Platten unter Beschreibung von Freiräumen an der zu schaffenden Verbindungszone verbunden werden, und dass die besagten Freiräume nach dem Heißpressen und dem plastischen Fließen des Materials ausgefüllt werden.

11. Verfahren nach Anspruch 7, **dadurch gekennzeichnet, dass** die zu verbindenden Materialbahnen oder Platten aus textilem Material mit thermoplastischen Fasern oder Folien bestehen und dass durch das Aufweichen und plastische Fließen ihre molekulare Verbindung gewährleistet wird.

12. Boden- oder Wandbelag, bei dem die Verbindung von Materialbahnen oder Platten nach einem der Ansprüche 1 - 6 und die Umsetzung des Verfahrens nach den Ansprüchen 7 - 11 zum Einsatz kommen, **dadurch gekennzeichnet, dass** er in seiner Struktur bzw. den Materialbahnen eine Zwischenschicht umfasst, die eine Stoßverbindung einschließt.

13. Boden- oder Wandbelag, bei dem die Verbindung von Materialbahnen oder Platten nach einem der Ansprüche 7 - 11 zum Einsatz kommt, **dadurch gekennzeichnet, dass** er als solches ein Fertigprodukt bildet.
